# EUROPEAN PATENT APPLICATION

(11) **EP 2 113 741 A1**
(43) Date of publication of application: **04.11.2009**
(21) Application number: 09158965.5
(22) Date of filing: 28.04.2009
(51) Int. Cl.: G01B 11/25

(54) **Timber measurement process**

(30) Priority: 28.04.2008 SE 0800962
(71) Applicant: SP Trätek Sveriges Tekniska Forskning, 931 77 Skelleftea (SE)
(72) Inventor: Oja, Johan, 932 34, ÖRVIKEN (SE)
(74) Representative: Platt, Timothy Nathaniel

(57) **Abstract**

A system and a process for automatic determination, by means of a measuring scanner, of the dimensions and crookedness of logs, conveyed in the longitudinal direction of the log, has at least two scanner stations spaced from each other in the conveyor direction. A measurement of a cross-section through the log at one scanner section is compared in the computer with the measurement of the same cross-section when passing the next scanner station. Then, deviations therebetween due through shaking or rolling of the log during measurement are compensated for in the computer to provide a correct measurement of the dimensions and crookedness of the log without errors caused by shaking or rolling.

## Description

### TECHNICAL FIELD

The present invention relates to a system and a process for improved automatic dimensional measurement of logs in accordance with the preamble to the attached patent claims 1 and 7 respectively. The present invention also relates to a computer program according to claim 9 which comprises program instructions for controlling a computer included in the system according to the invention for performing the process according to the invention.

### BACKGROUND

In today's automated sawmills, it is important for efficient operation that each log entering the conveyor belt be sorted in the correct compartment (for pulp wood or lumber etc.) after automated scanning primarily as regards dimensions and crookedness. From an economic perspective, correct scanning/measurement of the dimensions and crookedness of the raw material is just as important for the sawmill as for the timber supplier (the forest owner) since the price is determined inter alia by these properties of the raw product.

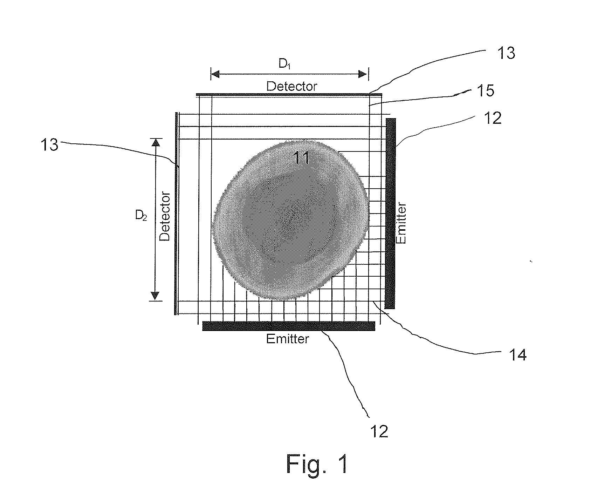

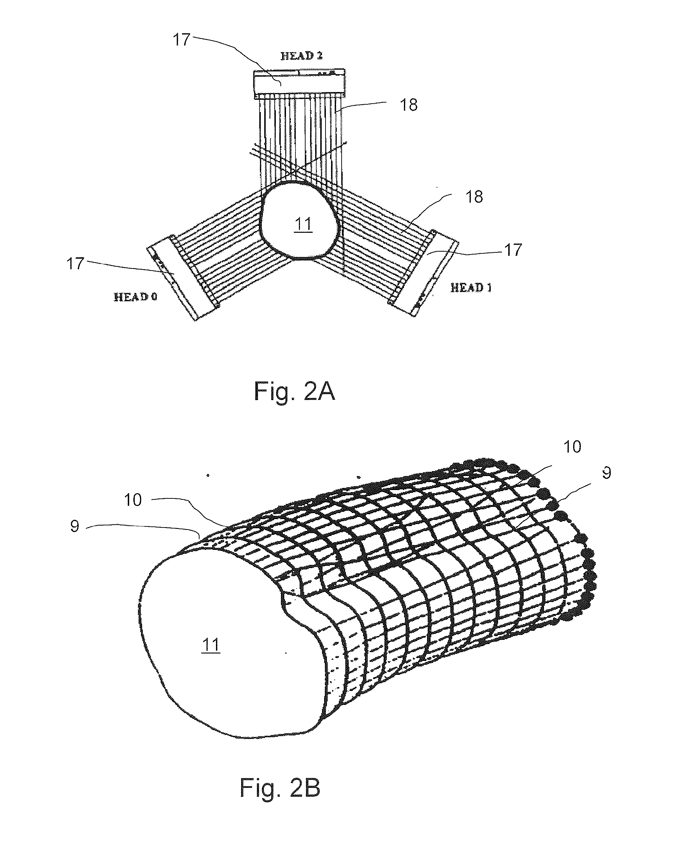

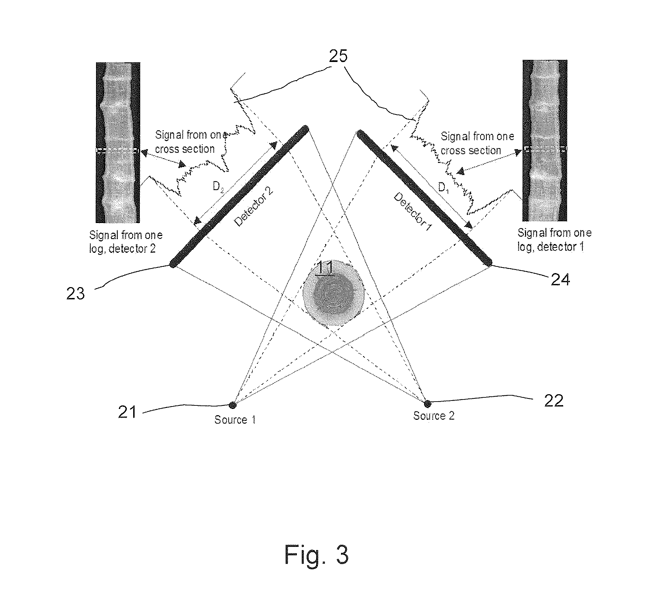

The geometric shape of the log is determined with the aid of a scanner frame placed around the log conveyor, which makes cross-sectional measurements of the log while it is fed on the conveyor through the scanner frame in the longitudinal direction of the log. These scanners are usually of one of three different types: a so-called light-curtain scanner as shown in fig. 1; a laser scanner as shown in fig. 2 based on triangulation with line lasers or point lasers and finally an X-ray scanner, as shown in fig. 3. At regular time intervals the cross-sectional shape is registered many times until the entire log has passed through the scanner frame. The geometric shape of each individual cross-section can be measured with great accuracy. The shape of the log in three dimensions is recreated by compositing the individual cross-sections into a single three-dimensional shape, assuming that the log moves with complete steadiness in its longitudinal direction through the scanner frame. This method is described in the paper: Kompendium i Virkesmätning, part VIII, Automatmätning, published on 26 September 2000 by the Swedish Lumber Measurement Council (Virkesmätingsrådet).

One problem however is that the log often vibrates, shakes or otherwise changes its position on the conveyor while passing through the scanner frame, for example by rolling on the conveyor. When the log moves during scanning/measurement, a measurement error occurs when the composite of the individual cross-section is to be made. The recreated composite log shape will not agree with actual shape of the log. This will mean that a log, for example, which is actually straight, can be considered to be very crooked when the scanning results are analyzed. Since a crooked log gives a poorer yield when the log is sawn, straightness is a very important property. It is thus of great interest to be able to measure with great precision how straight or crooked the log is so that it can be sorted into the correct compartment for further sawing and so that the correct price will be paid for the timber quality which has been delivered to the sawmill.

### SUMMARY OF THE INVENTION

The purpose of the present invention is to achieve a system and a process, which, in a simple manner, completely eliminate theses errors in crookedness/straightness measurements of the logs fed into the sawmill. This purpose is achieved with a system and a process according to the preambles of claims 1 and 7 respectively, which have the properties disclosed in the characterizing clauses of claims 1 and 7 respectively. The purpose is achieved as well by a computer program product in accordance with claim 9.

### DESCRIPTION OF THE FIGURES

The invention will be illustrated below with reference to a number of embodiments which are described with reference to the figures, of which:
Fig. 1 shows a light-curtain scanner, of a type known per se, which can be included in one embodiment of a system according to the invention,
Fig. 2A shows a laser triangulation scanner, of a type known per se, which can be included in another embodiment of a system according to the invention,
Fig. 2B shows a 3D computer representation of the surface of a log derived from sequential cross-sectional measurements,
Fig 3 shows an X-ray scanner frame, which is known per se, which can be included in another embodiment of a system according to the invention,
Fig. 4 shows, purely schematically, a system according to the invention for correct sorting of logs according to shape and dimension,
Fig. 5(a) and 5(b) show measurement of the same cross-section to different measuring stations, with the log rotating between the stations, and
Fig. 6 shows a diagram of log radius measurements at these two different measuring stations.

### DESCRIPTION OF THE EMBODIMENTS

Fig: 1 shows a light-curtain scanner of the type which has been used today alone at the feed end to a sawmill conveyor for sorting. The two emitter-receiver pairs are arranged perpendicular to each other, which provides an instantaneous diameter measurement of the log in the horizontal and vertical directions, at different intervals as the log passes in its longitudinal direction through the light-curtain scanner frame. This can provide a rough estimate of the entire shape of the log.

A much better picture of the lateral surface of the log can be obtained with a so-called 3D scanner. The name indicates that the scanning is done in three dimensions, which is however not entirely correct. This equipment primarily does not measure the diameter of the log but rather the outer contours of the log in cross-section along the log.

Furthermore, in the scanner frame there are the photo cells which register the longitudinal movement of the log. Since the scanning is performed at a number of cross-sections along the entire log, the structure of its entire outer surface will also be mapped.

The 3D scanner according to one example shown in Fig. 2A consists of a scanner frame with three scanner beams 17, which measure, with laser light beams (18), the distance to the outer surface of the log when it passes through the scanner frame. The number of measurements per second is 120 or 240 depending on the conveyor speed. 120° increments in the placement of the scanner beams means that the entire circumference of the log will, in principle, be covered by the scan. Each scanner beam 17 has sixteen laser scanner units, which means that a total of 48 measuring points will be available for scanning a log cross-section. In reality, all of these points are not always used when the log is too thin to place all these points on the log surface. Conversely, for thick logs, the available number of points will not suffice to cover all portions of the outer surface. There will thus be spaces between the rays from adjacent measuring beams and the scanner software will then have to interpolate the surface in the area between the missing measuring points.

The principle of 3D scanning is thus based on determining geometrically the position of the individual laser points on the log surface as shown on Fig. 2B. Using this information, it is possible to compute mathematically a large number of dimensions for each individual log cross-section 9 and 10, amongst them the area of the cross-section and the diameter of the circle corresponding thereto and the maximum and minimum diameters. 3D scanning technology is also used for yield optimization when log dividing, since, with knowledge of the geometry of the entire log, it is possible to calculate exactly which combinations of board dimensions will provide the best yield. The possibility of describing in detail the shape of the log has made possible to a certain extent to also determine its "quality".

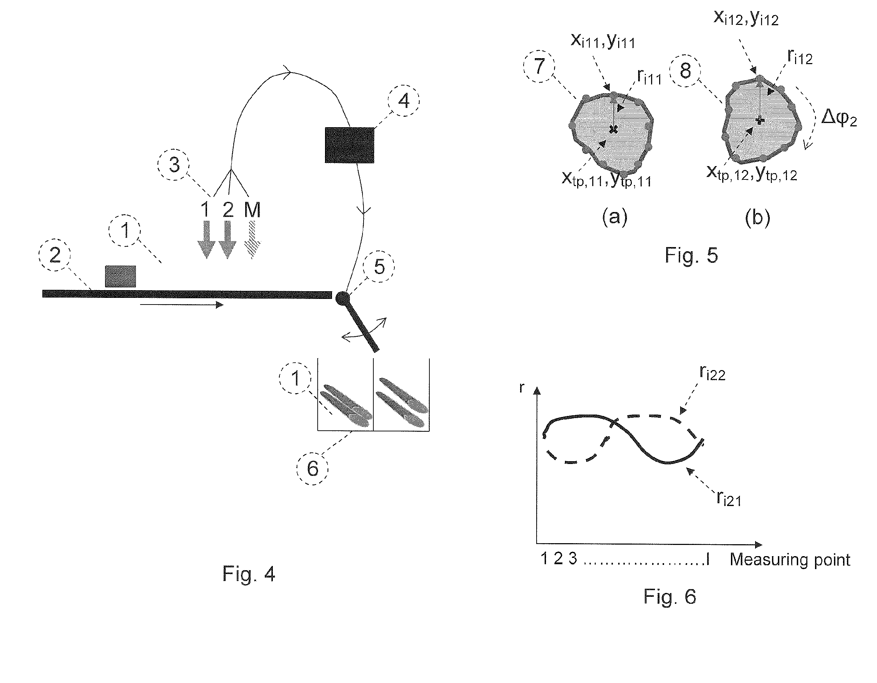

According to the simplest embodiment of the invention, two scanner frames are used, which are arranged spaced from each other in the log conveyor direction. The principle is shown in general in Fig. 4. The log 1 is moved with a conveyor 2. The conveyance is done longitudinally. In the ideal case, the log will lie completely stationary on the conveyor during movement. In reality, however, the log often moves in some manner. It can for example vibrate, jump or roll to one side while it is being transported longitudinally. During movement, the log passes the measuring location 3, which in this most simple embodiment are two in number, but which can be numerous in other embodiments. The shape and position of the log is measured at the respective scanning location 3. Information on the shape and position of each cross-section is registered and interpreted by the computer 4. By virtue of the fact that the position and rotation of each cross-section has been recorded at more than one position (7 and 8), consideration can be taken to the fact that the position and rotation of the log can have been changed. The computer 4 sends a sorting instruction to the sorting device 5. The sorting device 5 steers the log 1 to a special compartment 6.

With two scanning locations, the scanning and calculation can occur for example according to the following process:
1. At time 1, the cross-sectional shape of the log is scanned at I scanning points at the respective scanning location. For each scanning point the coordinates xᵢₛₘ,yᵢₛₘ are measured, where I is the scanning point (1 to I if the number of scanning points is I, that is i_{1,} i_{2,} i_{3 ...} i), s is the section (1 to N, where N is the number of cross-sections measured when a log passes the two scanning locations) and n is the scanning location (1 to M if the number of scanning locations is M, in this most simple example M = 2). Based on these measurements, a center of gravity x_{tp,sm},y_{tp,sm} can be computed for each respective cross-section and scanning location. Based on this center of gravity, a radius rᵢₛₘ can be computed for each measuring point. This means that the following measurements and computations can be made at time 1:
   - At scanning location 1 for section 2, the coordinates xᵢ₂₁,yᵢ₂₁ are measured, where i = 1 to I
   - At scanning location 2 for section 1, the coordinates xᵢ₁₂,yᵢ₁₂ are measured, where i = 1 to I
   - For section 1 the coordinates are computed for the geometric centre of gravity X_{tp,12},y_{tp,12} and
      for each measuring point, a radius is rᵢ₁₂ computed, where i = 1 to I
   - For section 2 the coordinates are computed for the geometric centre of gravity x_{tp,21},y_{tp,21} and
      for each measuring point, a radius rᵢ₂₁ is computed, where i = 1 to I
2. At time 2, the cross-sectional shape of the log is once again measured at I measuring points at the respective scanning location. Now the section 1 has however passed through the measuring equipment while section 2 has reached measuring location 2 and section 3 has reached measuring location 1. This will mean that the following measurements and calculations are made at time 2: -
   - At scanning location 1 for section 3, the coordinates xᵢ₃₁,yᵢ₃₁ are measured, where i = 1 to I
   - At scanning location 2 for section 2, the coordinates xᵢ₂₂,yᵢ₂₂ are measured, where i = 1 to I
   - For section 2, the coordinates for the geometric centre of gravity x_{tp,22},y_{tp,22} are calculated and
      for each measuring point, a radius rᵢ₂₂ is computed, where i = 1 to I
   - For section 3, the coordinates for the geometric centre of gravity x_{tp,31},y_{tp,31} are calculated, and
      for each measuring point, a radius rᵢ₃₁ is computed, where i = 1 to I
3. For section 2, the position and shape of the cross-section have been scanned at both time 1 and time 2. This means that the position of the centre of gravity of the cross-section can be compared between time 1 (x_{tp,21},y_{tp,21}) and time 2 (x_{tp,22},y_{tp,22}). If the log has lain still on the conveyor, the centre of gravity of the cross-section will be the same at both points in time. Any movement can be measured by computing the difference (Δx₂,Δy₂) between the position of the centre of gravity at the two points in time. Thereafter, the radii for the respective measuring points (Fig. 6) can be compared between the two points in time (rᵢ₂₁ and rᵢ₂₂ respectively). If the log, between these points in time, had changed position rotationally, these changes in the rotational position Δϕ₂ can be computed based on this comparison.
4. At the next point in time (time 3) the cross-sectional shape of the log is measured again at I measuring points at the respective scanning location. Now, however, an additional cross-section (section 2) has passed the measuring equipment, while the subsequent section (section 3) has reached measuring location 2 and the next section (section 4) has reached measuring location 1. This means that the following measurements and calculations are made at time 3:
   - At scanning location 1, for section 4, the coordinates xᵢ₄₁,yᵢ₄₁ are measured, where i = 1 to I
   - At scanning location 2, for section 3, the coordinates xᵢ₃₂,yᵢ₃₂ are measured, where i = 1 to I
   - For section 3 the coordinates for the geometric centre of gravity x_{tp,32},y_{tp,32} are calculated and
      for each measuring point, a radius rᵢ₃₂ is computed, where i = 1 to I
   - For section 4, the coordinates are computed for the geometric centre of gravity x_{tp,41},y_{tp,41} and
      for each measuring point, a radius rᵢ₄₁ is computed, where i = 1 to I.
5. Now an additional section (section 3) is scanned at two points in time (times 2 and 3). This means that the position for the centre of gravity of the cross-section can be compared between time 2 (xᵢ₃₁,yᵢ₃₁) and time 3 (x_{tp,32},y_{tp,32}). Any change in the centre of gravity between times 2 and 3 (Δx₃,Δy₃) can then be computed.
   Then any rotation Δϕ₃ between times 2 and 3 can be computed.
6. Steps 4 and 5 are repeated for each new section until the entire log has passed through the measuring equipment.
7. The shape of the log in three dimensions is described with the centre of gravity x_{tp,s},y_{tp,s} and the radius rᵢₛ where s = 1 to N and i = 1 to I.
8. The positional changes of the log on the conveyor during movement through the measuring equipment is described for each point in time with the change in the centre of gravity Δxₜ,Δyₜ and the rotational change Δϕₜ, where t =2 to N.
9. Finally, the shape of the log can be compensated for with regard to the measured movement of the log Δxₜ,Δyₜ and Δϕₜ. The compensated shape of the log is described by the centre of gravity x_{komptp,s},y_{komptp,s} and the radii r_{komp,is}, where the section is given with the index s = 1 to N and the measuring point is given with index i = 1 to I.

What has been described above should not be interpreted as a limitation of the present invention, but should only serve as an illustrative example thereof. The measurement of the shape of the log must be made at at least two positions but measurements can be made with advantage at more than two positions. The scanning frame in the above-described preferred embodiment is a triangulation laser scanner of so-called 3D type (Fig. 2). But the invention can also be realized by using a light-curtain scanner (Fig. 1) or a X-ray scanner (Fig. 3), but it can also be accomplished by completely other measuring principles such as ultrasound. It is also possible to use different measuring methods at the different measuring locations. If the measurement is done with the aid of triangulation, based on line or point lasers, the measurements can also be made for exampled by an equipment consisting of a set of cameras. A laser setup can be supplemented with one or more laser setups.

## Claims

1. System for automated shape and dimensional measurement of a log fed forward in its longitudinal direction, comprising:
• a timber feeder device,
• a first measuring station, which can perform instantaneous measurements of the cross-section of the log, when the log passes therethrough in its longitudinal direction,
• a computer for controlling, receiving and processing such instantaneous measurements
**characterized by**
• a second measuring station arranged spaced from the first measuring station in the feeding direction, said second measuring station being able to perform instantaneous measurement of the cross-section of the log, when the log passes in its longitudinal direction therethrough,
• instantaneous measurements of the cross-section of the log from the first and second measuring stations being compared and processed by the computer to provide a correct three-dimensional measurement of the actual shape and dimensions of the log, notwithstanding any shaking or rotation of the log during its passage through the measuring stations.

2. System according to claim 1, **characterized by** an additional one of more measuring stations arranged after the second measuring station in the feed direction.

3. System according to claim 2, **characterized in that** one or more measuring stations comprise a light-curtain scanner.

4. System according to claim 2, **characterized in that** one or more measuring stations comprise a laser triangulation scanner.

5. System according to claim 2, **characterized in that** one or more measuring stations comprise a X-ray scanner.

6. System according to claim 1, **characterized in that** the timber feeding device is a conveyor and that each of the measuring stations is arranged to essentially surround the conveyor.

7. Process for automated correct shape and dimensional measurement of a log fed forward in its longitudinal directions, by means of a system according to claim 1, **characterized by** the following steps:
a) Feeding of a log in its longitudinal direction through at least first and second measuring stations,
b) Determination of the coordinates at the first measuring station of a plurality of measuring points (i= 1, 2, 3, ...) around the circumference of a specific cross-section (s) through the log and computing the coordinates for the geometric centre of gravity of the cross-section X_{TP,1,1},Y_{TP,1,1}, at the passing of the specific cross-section through the first measuring station,
c) Determining the coordinates at the second measuring station of a plurality of measuring points (i_{1,} i_{2, ...} i_{I}) around the circumference of said specific cross-section (sₙ) and computing the coordinates of the geometric centre of gravity of the cross-section X_{TP,1,1},Y_{TP,1,1}, at the passing of the specific cross-section through the second measuring station,
d) A computer comparison between the coordinates for the geometric centre of gravity of the cross-section when passing the first and second measuring stations respectively during steps b) and c),
e) A repetition of steps a) - d) for a second specific cross-section after the first specific cross-section through the log,
f) Computer determination of the three-dimensional shape and dimensions of the log with compensation for any deviation between the coordinates for the geometric centre of gravity for the respective cross-section when passing through the first and the second measuring stations respectively.

8. Process according to claim 7, **characterized by** the following additional step:
g) Sorting the log after computer determination of the three-dimensional shape of the log on the basis of the computer determination.

9. A computer program product for controlling a computer which is included in a system according to one of claims 1 - 6 for carrying out the steps b) - f) in a process according to claim 7.
